# EUROPEAN PATENT APPLICATION

(11) **EP 2 287 653 A1**
(43) Date of publication of application: **23.02.2011**
(21) Application number: 10173416.8
(22) Date of filing: 19.08.2010
(51) Int. Cl.: G02B 27/09, G02B 3/08, F21V 5/04

(54) **Optical lens and illumination fixture using the same**

(30) Priority: 20.08.2009 JP 2009191276
(71) Applicant: Panasonic Electric Works Co., Ltd, Kadoma-shi Osaka 571-8686 (JP)
(72) Inventor: Murakami, Tadashi, Hirakata, Osaka (JP)
(74) Representative: Rüger, Barthelt & Abel Patentanwälte

(57) **Abstract**

[Object] To provide a small-sized optical lens that enables light to be distributed in a wide range with use of a high power light source, and deterioration due to heat generation by the light source to be suppressed, and an illumination fixture using the optical lens.

[Means for Settlement] Rays of light, which are emitted from a light source 10 and incident on sites A and B on a concave incident surface 21 formed symmetrically with respect to an optical axis X, are focused in a direction indicated by an open arrows α or α' because a portion surrounded by A-A'-B'-B in a cross section of an optical lens 20 has a convex lens shape. Also, rays of the light incident on sites C and D on the concave incident surface 21 are diffused in a vertical direction indicated by an open arrow β because a portion surrounded by C-C'-D'-D has a concave lens shape. Further, rays of the light incident on two V-shaped incident surfaces that share end parts with the concave incident surface 21 and are formed symmetrically with respect to the optical axis X are focused in directions indicated by open arrows γ and γ' having sufficient open angles θ with the optical axis X because a portion surrounded by E-E'-F'-F in the cross-section of the optical lens 20 has a convex lens shape.

## Description

### [Field of the Invention]

The present invention relates to an optical lens and an illumination fixture using the optical lens, and more particularly, to an optical lens used to diffuse light emitted from a light source in a wide range to thereby effectively provide illumination.

### [Background Art]

There is conventionally known an illumination fixture that is attached to each of poles installed upright at substantially regular intervals at edge ends of a road, and illuminates a relatively wide area. As such an illumination fixture, there is proposed one that performs control with an optical lens such that light emitted from a light emitting diode (hereinafter abbreviated to an "LED") is irradiated in a desired direction.

For example, an illumination fixture described in Patent document 1 includes: as illustrated in Fig. 14, an LED light source 110; a sub-lens 121 that emits fan-shaped focused light flux expanding in a longitudinal direction X of an illumination area; and a main lens 122 that includes a concave light incident surface and a convex light emitting surface, and focuses light in the X direction. This allows an illumination fixture having a wide distribution of light in the X-X direction, i.e., a bat wing light distribution characteristic, to be achieved.

Also, the present applicant has proposed an illumination fixture provided with an LED light source 210 and an optical lens 220, in which the optical lens 220 includes: a concave incident surface 221 facing to the LED light source 210; and a convex emitting surface 222 that focuses light in α and α' directions, and diffuses the light in a β direction (Patent document 2). This enables the illumination fixture capable of providing uniform illumination in each of the α, α', and β directions to be obtained.

Any of the above-described conventional illumination fixtures has a problem that, in the case where a target illumination intensity value is low in an irradiation range, an LED may be a small and low power one, and the optical lens used is also not required to be considerably large, whereas, in the case where the target illumination intensity value is high, and a high power LED, an LED array including a large number of LEDs, or the like is used as the light source, an optical lens completely covering the light source is required, and therefore the optical lens is increased in size.

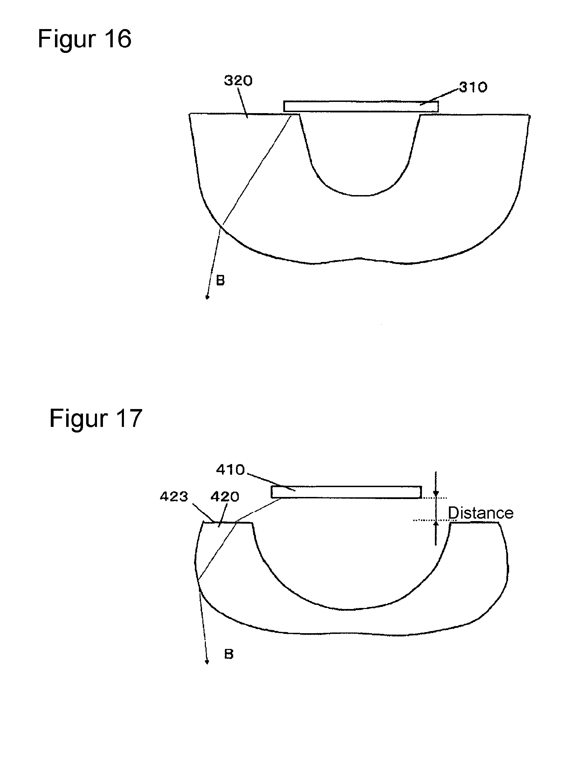

An illumination fixture for the case where the above-described problem is attempted to be solved with use of a relatively small lens has a configuration in which, for example, as illustrated in Fig. 16, an LED 310 is close to an upper surface of an optical lens 320. However, this configuration may deteriorate the optical lens 320 over time due to heat generation by the LED 310.

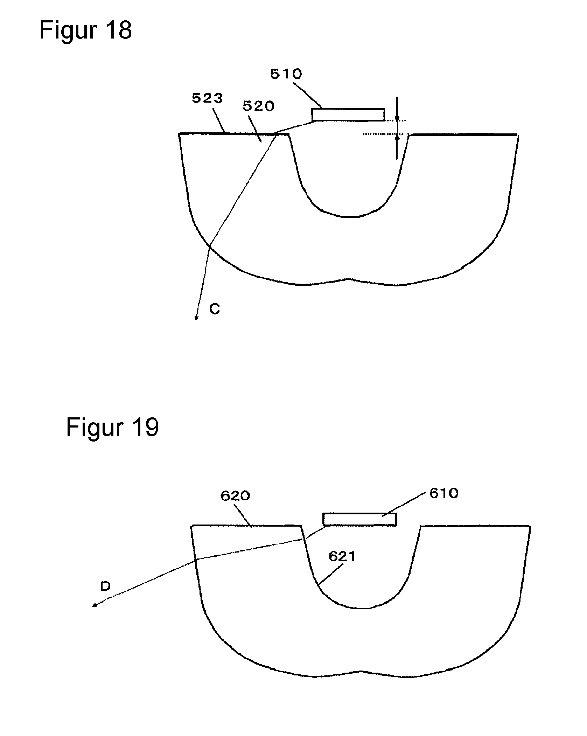

Such a heat deterioration problem of an optical lens can be at least avoided by, as illustrated in Figs. 17 and 18, keeping a distance between an LED and an optical lens. However, in any of the cases illustrated in Figs. 17 and 18, a part of light emitted from the LED 410 or 510 is incident on an upper surface 423 or 523 of the optical lens 420 or 520; passes through a light path indicated by B or C; and is irradiated in a direction different from an intended direction.

On the other hand, an example of an illumination fixture illustrated in Fig. 19 illustrates, for comparison, the case where no problem arises even with a conventional technique, in which light emitted from an LED 610 is incident only on a concave incident surface 621 of an optical lens 602 to pass through a light path D, and then emitted in a desired direction.

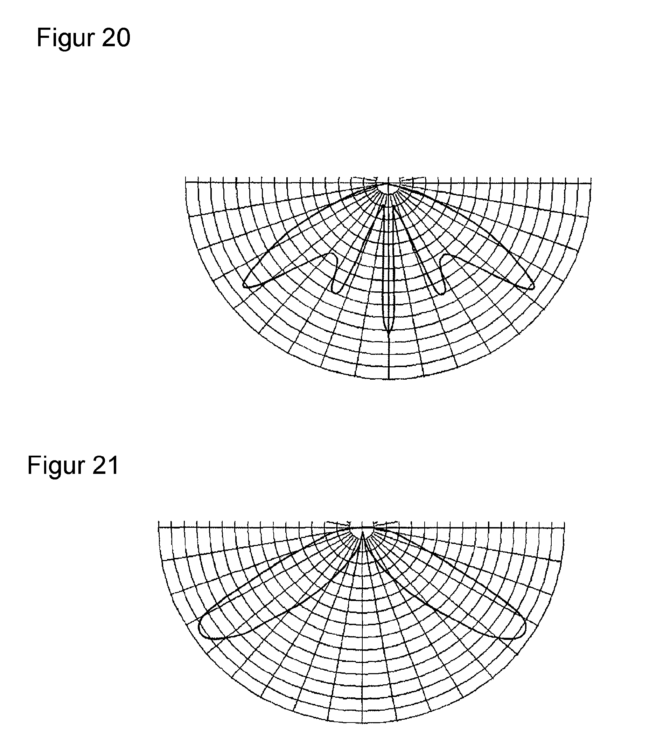

Figs. 20 and 21 respectively illustrate simulation results of light distribution characteristics of the illumination fixtures having the configurations illustrated in Figs. 18 and 19. Referring to these diagrams, it turns out that, in the case of the illumination fixture illustrated in Fig. 20, light in a part of a bat wing light distribution is deflected obliquely downward and directly downward to disturb the light distribution.

### [Conventional Technique Document]

### [Patent Document]

[Patent document 1] Japanese Unexamined Patent Publication No. 2009-99493
[Patent document 2] Japanese patent application No. 2009-18197

### [Disclosure of the Invention]

### [Problems to be solved by the Invention]

The present invention is made in consideration of the above-described situations, and has an object to provide a small-sized optical lens that enables light to be distributed in a wide range with use of a high power light source, and deterioration due to heat generation by the light source to be suppressed, and an illumination fixture using the optical lens.

### [Means adapted to solve the Problems]

An optical lens of the present invention has an incident surface incident with light emitted from a light source, and an emitting surface emitting the light incident on the incident surface, and diffuses and irradiates the light from the light source on an illumination area, wherein the incident surface includes: a concave incident surface that faces to the light source and is formed in a concave shape symmetrical with respect to an optical axis of the light source; and two V-shaped incident surfaces that share end parts with the concave incident surface and is formed symmetrically with respect to the optical axis of the light source, and the emitting surface includes two convex emitting surfaces formed symmetrically with respect to the optical axis of the light source.

Based on this configuration, there can be provided a small-sized optical lens that enables a bat wing light distribution to be provided in a wide range with use of a high power light source, and deterioration due to heat generation by the light source to be suppressed.

Also, the present invention includes an optical lens wherein in the above-described optical lens, a surface of the V-shaped incident surface is formed inside an extended surface of a virtual surface connecting between an end part of the light source and the end part shared with the concave incident surface, the surface sharing the end part with the concave incident surface.

Based on this configuration, the light emitted from the light source can be prevented from being incident on the surface of the V-shaped incident surface, which shares the end part with the concave incident surface, and therefore the bat wing light distribution can be avoided from being disturbed.

Further, the present invention includes an optical lens wherein in the above-described optical lens, a surface of the V-shaped incident surface is formed to have an angle formed by bisecting an angle formed between an extended surface of a virtual surface connecting between one end part of the light source and the end part shared with the concave incident surface and a direction of light that is incident on a vicinity of the end part of the concave incident surface from the other end part of the light source and emitted from the surface sharing the end part with the V-shaped incident surface, the surface sharing the end part with the concave incident surface.

Based on this configuration, the light emitted from the light source can be prevented from being incident on the surface of the V-shaped incident surface, which shares the end part with the concave incident surface, and therefore the disturbance of the bat wing light distribution can be minimized.

Also, the present invention includes an optical lens wherein in the above-described optical lens, the other surface of the V-shaped incident surface is formed in a convex shape, the other surface facing to the surface sharing the end part with the concave incident surface.

Based on this configuration, a peak luminous intensity value necessary for the bat wing light distribution can be determined depending on intended use of an illumination fixture.

Further, the present invention includes an optical lens wherein in the above-described optical lens, the other surface of the V-shaped incident surface is formed in a concave shape, the other surface facing to the surface sharing the end part with the concave incident surface.

Based on this configuration, a peak luminous intensity value necessary for the bat wing light distribution can be determined depending on intended use of an illumination fixture.

Still further, the present invention includes an optical lens wherein in the above-described optical lens, a plurality of the V-shaped incident surfaces are formed respectively symmetrically with respect to the optical axis of the light source.

Based on this configuration, the light emitted from the light source can be prevented from being incident on the surface of the V-shaped incident surface, which shares the end part with the concave incident surface, and therefore the bat wing light distribution can be avoided from being disturbed.

An illumination fixture of the present invention includes: the above-described optical lens; and the light source arranged such that the optical axis is adjusted to a position that symmetrically divides the concave incident surface.

Based on this configuration, there can be provided an illumination fixture provided with a small-sized optical lens that enables light to be distributed in a wide range with use of a high power light source, and deterioration due to heat generation by the light source to be suppressed.

### [Effect of the Invention]

According to the present invention, there can be provided a small-sized optical lens that enables light to be distributed in a wide range with use of a high power light source, and deterioration due to heat generation by the light source to be suppressed, and an illumination fixture using the optical lens.

### [Brief Description of the Drawings]

[Fig. 1] Fig. 1 is a cross-sectional view illustrating a schematic configuration of an illumination fixture according to an embodiment of the present invention.
[Fig. 2] Fig. 2 is a diagram illustrating a light distribution characteristic of a light source in the embodiment of the present invention.
[Fig. 3] Figs. 3 (a) to (c) are cross-sectional views illustrating schematic configurations of an LED light source in the embodiment of the present invention.
[Fig. 4] Fig. 4 is a cross-sectional view for describing a shape of an optical lens according of the embodiment of the present invention.
[Fig. 5] Fig. 5 is a ray cross-sectional view for describing functions of the optical lens according to the embodiment of the present invention.
[Fig. 6] Fig. 6 is a cross-sectional view illustrating a variation of the optical lens according to the embodiment of the present invention.
[Fig. 7] Fig. 7 is an enlarged cross-sectional view of a main part illustrating the variation of the optical lens according to the embodiment of the present invention.
[Fig. 8] Fig. 8 is a cross-sectional view illustrating another variation of the optical lens according to the embodiment of the present invention.
[Fig. 9] Fig. 9 is a cross-sectional view illustrating still another variation of the optical lens according to the embodiment of the present invention.
[Fig. 10] Fig. 10 is an enlarged cross-sectional view of a main part illustrating yet another variation of the optical lens according to the embodiment of the present invention.
[Fig. 11] Fig. 11 is a perspective view illustrating a schematic configuration of an illumination fixture provide with a rotating body shaped optical lens according to the embodiment of the present invention.
[Fig. 12] Fig. 12 is a perspective view illustrating a schematic configuration of an illumination fixture provide with a cylindrically shaped optical lens according to the embodiment of the present invention.
[Fig. 13] Fig. 13 is a perspective view illustrating a schematic configuration of an illumination fixture provide with a spheroid shaped optical lens according to the embodiment of the present invention.

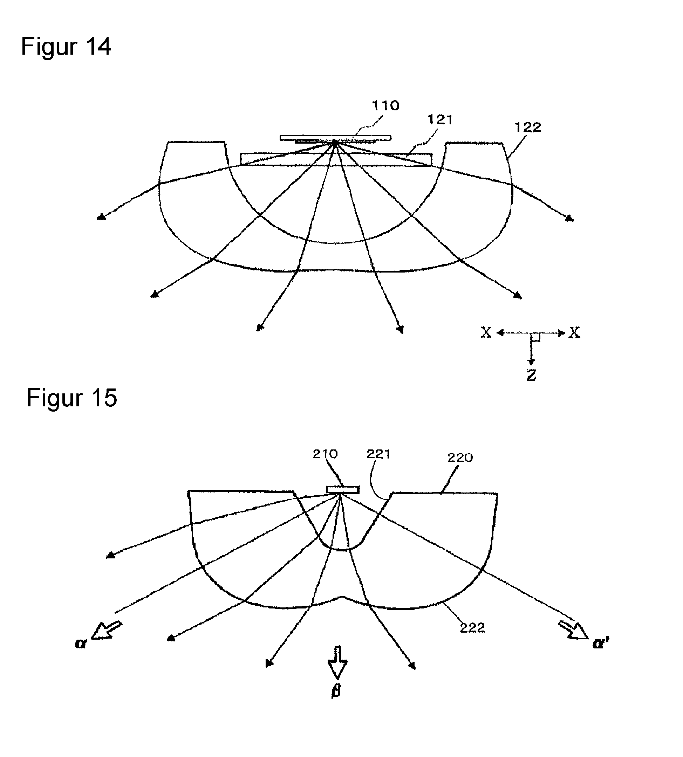

[Fig. 14] Fig. 14 is a cross-sectional view illustrating a schematic configuration of a conventional illumination fixture.
[Fig. 15] Fig. 15 is a cross-sectional view illustrating a schematic configuration of a conventional illumination fixture.
[Fig. 16] Fig. 16 is a cross-sectional view illustrating a schematic configuration of a conventional illumination fixture.
[Fig. 17] Fig. 17 is a cross-sectional view illustrating a schematic configuration of a conventional illumination fixture.
[Fig. 18] Fig. 18 is a cross-sectional view illustrating a schematic configuration of a conventional illumination fixture.
[Fig. 19] Fig. 19 is a cross-sectional view illustrating a schematic configuration of an illumination fixture for the case where no problem arises even with a conventional technique.
[Fig. 20] Fig. 20 is a diagram illustrating a result of simulating a light distribution characteristic of the conventional illumination fixture.
[Fig. 21] Fig. 21 is a diagram illustrating a result of simulating the light distribution characteristic of the illumination fixture for the case where no problem arises even with a conventional technique.

### [Best Mode for Carrying Out the Invention]

An optical lens and an illumination fixture using the optical lens according to an embodiment of the present invention will hereinafter be described in detail referring to the drawings.

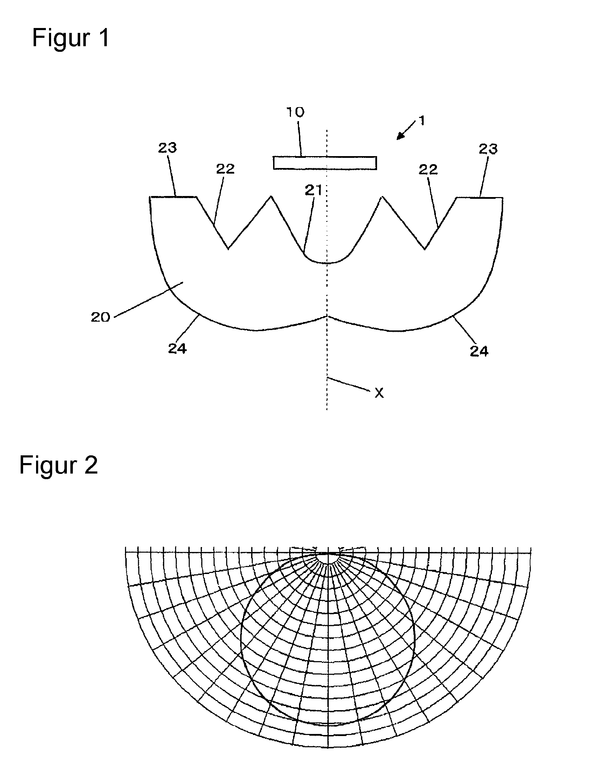

Fig. 1 is a cross-sectional view illustrating a schematic configuration of the illumination fixture according to the embodiment of the present invention. In Fig. 1, the illumination fixture 1 includes a light source 10 and an optical lens 20.
The optical lens 20 is intended to avoid influence of heat from the light source 10, and also improve diffusibility and focusing performance to obtain a good bat wing light distribution, and, as illustrated in Fig. 1, provided with a concave incident surface 21, two V-shaped incident surfaces 22 and 22, and two convex emitting surfaces (details will be described later).

The light source 10 of the present embodiment is a substantially planar light source such as an LED, and emits light in a direction along an optical axis X. As the LED, a substantially nondirectional one as that having a light distribution characteristic illustrated in Fig. 2 can be used, and for example, a white LED mounted on a board provided with an optical system such as a reflection surface, or the like is used.

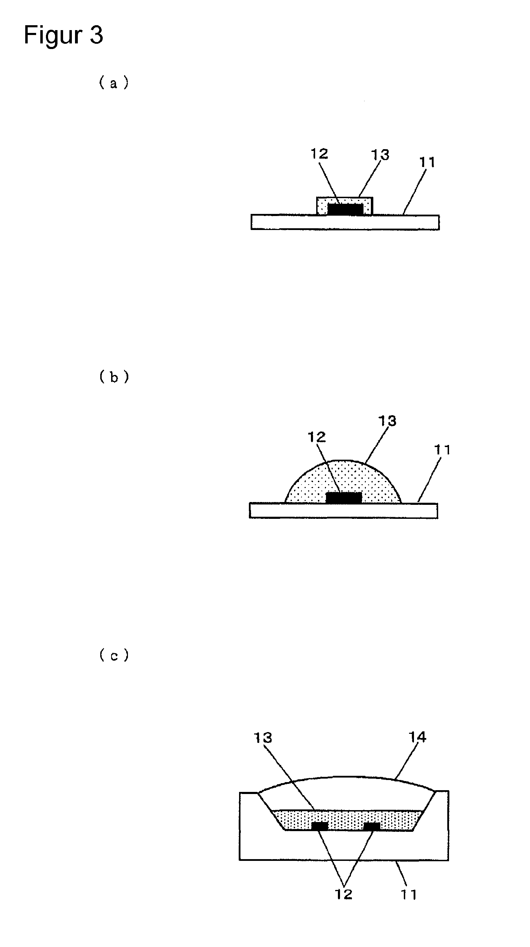

Figs. 3 (a) to (c) illustrate configuration examples of the light source 10, and any of the examples has a configuration in which a blue LED chip 12 is mounted on a board 11, which is then covered with a phosphor layer 13 formed of a resin or glass layer containing a diffusion material or the like. Note that only Fig. 3 (c) is configured to have a lens layer 14; however, the phosphor layer 13 and the lens layer 14 are not considerably different in size from each other, so that although the lens layer 14 is a convex lens, it has almost no focusing effect, and therefore does not influence the nondirectional light distribution illustrated in Fig. 2. Accordingly, a distributed light diffusion effect by the optical lens 20 of the present embodiment is not reduced.

The optical lens 20 is configured to be a tubular body including: the concave incident surface 21 that is formed just below the light source 10 in a concave shape symmetrical with respect to the optical axis X; the two V-shaped incident surfaces 22 and 22 that share end pats with the concave incident surface 21 and are formed symmetrically with respect to the optical axis X; flat bottom surface parts 23 and 23 that extend outward from the other end parts of the V-shaped incident surfaces 22 and 22; and the two convex emitting surface 24 and 24 that are formed symmetrically with respect to the optical axis X, refract light incident on the concave incident surface 21 and V-shaped incident surfaces 22 and 22 from the light source 10; and diffuse and emit the refracted light downward.

Note that, for the optical lens 20 of the present embodiment, a transparent material having a refractive index of approximately 1.3 to 1.8 for an emission spectrum of the light emitted by the light source can be used, such as acrylic resin, polycarbonate resin, silicon resin, polyolefin resin, or glass.

Any of the V-shaped incident surfaces 22 is formed of: one flat surface 22a sharing the end part t1 with the concave incident surface 21; and the other flat surface 22b facing to the one flat surface 22a.

The one surface 22a is formed so as to be inside a straight line l₁ formed by extending a line segment connecting between one end part e1 of the light source 10 and the end part t1 of the concave incident surface 21 (shared with the one surface 22a).

This can avoid a bat wing light distribution emitted from the convex emitting surfaces 24 and 24 from being disturbed because the light emitted from the light source 10 is incident only on the other surface 22b of the V-shaped incident surface 22 but not incident on the one surface 22a.

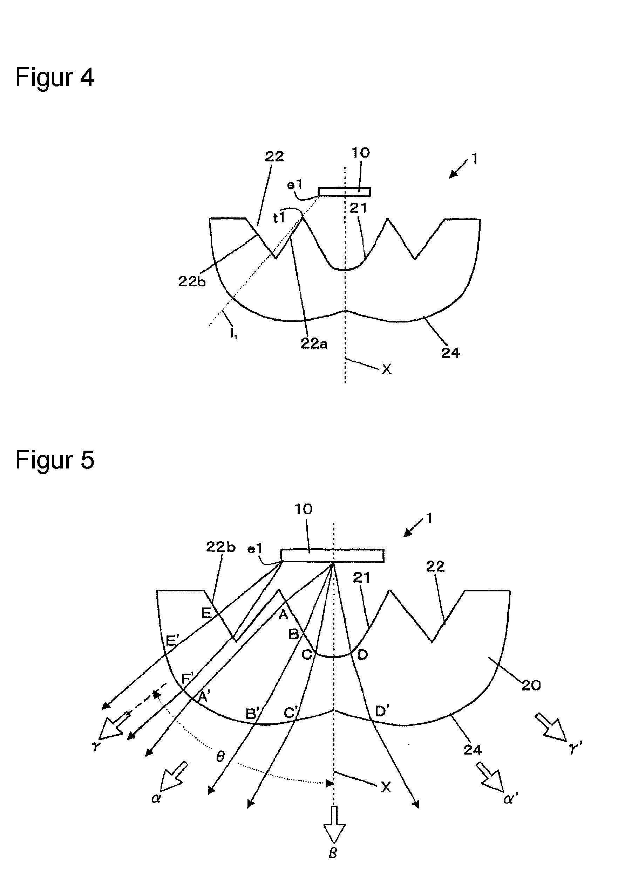

Next, functions of the optical lens 20 configured as above are described. Fig. 5 is a ray diagram for describing the functions of the optical lens 20.

Rays of light, which are emitted from the center of the light source 10 and incident on sites A and B on the concave incident surface 21, are focused in a direction indicated by an open arrow α because a portion surrounded by A-A'-B'-B in a cross section of the optical lens 20 has a convex lens shape. Note that a direction indicated by an open arrow α' is symmetrical to the direction indicated by the arrow α with respect to the optical axis X of the light source 10, and therefore rays of the light are also focused in the direction indicated by the arrow α'.

Also, rays of the light incident on sites C and D on the concave incident surface 21 are diffused on both sides of a vertical direction indicated by an open arrow β because a portion surrounded by C-C'-D'-D in the cross section has a concave lens shape.

On the other hand, rays of the light incident on the other surface 22b of the V-shaped incident surface 22 are focused in a direction indicated by an open arrow Y having a sufficient open angle θ with the optical axis X because a portion surrounded by E-E'-F'-F in the cross section of the optical lens 20 has a convex lens shape. Note that a direction indicated by an open arrow Y' is symmetrical to the direction indicated by the open arrow Y with respect to the optical axis X of the light source 10, and therefore rays of the light emitted from the light source 10 are also focused in the direction indicated by the arrow Y'.

In the above description, a shape of the one surface 22a is provided such that the light emitted from the light source 10 is incident only on the other surface 22b of the V-shaped incident surface 22; however, depending on a size of the light source 10, or a positional relationship of the light source 10 with the optical lens 20, the other light disturbing the bat wing light distribution may be incident on the optical lens 20.

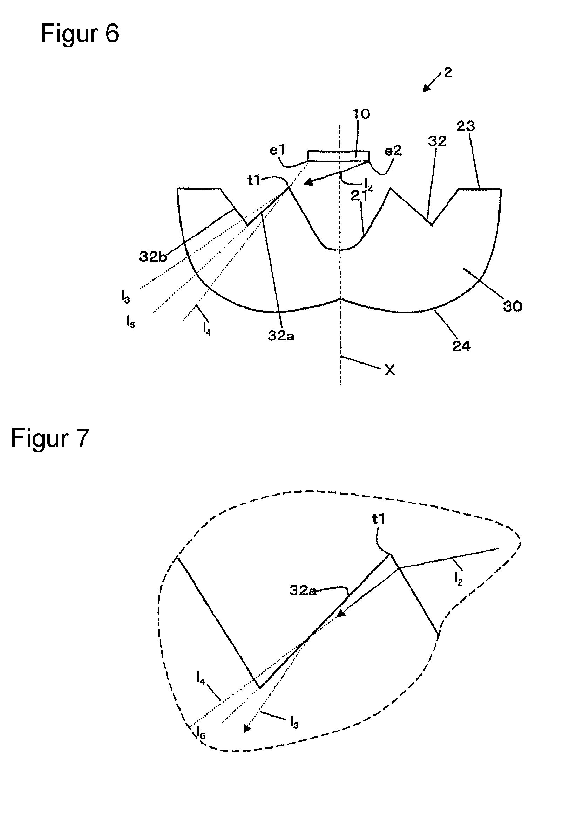

Fig. 6 illustrates a variation of the V-shaped incident surface, which is formed to minimize the disturbance of the bat wing light distribution caused by light emitted from the other end part e2 of the light source 10.

In Fig. 6, a ray of light I₂ emitted from the other end part e2 of the light source 10 is incident on the vicinity of the end part t1 of the concave incident surface 21, and then as illustrated in an enlarged cross-sectional view of Fig. 7, separated into a ray I₃ reflected by an inner surface of one surface 32a of the V-shaped incident surface 32 and a ray I₄ traveling straight. These rays cause the bat wing light distribution to be disturbed.

For this reason, in Fig. 7, an angle of the one surface 32a of the V-shaped incident surface 32 is provided so as to correspond to a direction I₅ determined by bisecting an angle formed between an extended surface 15 of a virtual surface connecting between the on end part e1 of the light source 10 and the end part t1 of the concave incident surface 21 and the above-described straight traveling ray I₄ such that the ray incident from the surface and the ray reflected by the inner surface is prevented from becoming excessive in amount. This enables the disturbance of the bat wing light distribution by the one surface 32a to be minimized.

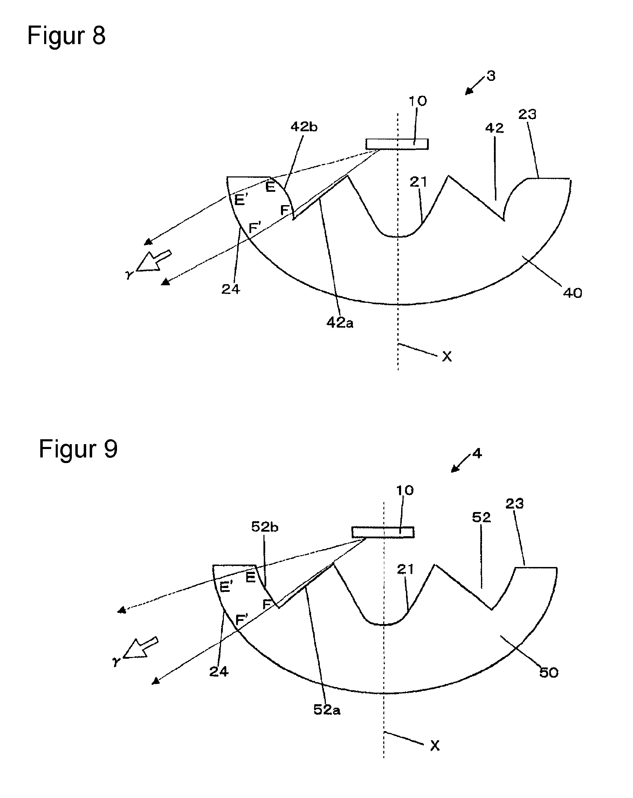

Figs. 8 and 9 are diagrams illustrating the other variations of the V-shaped incident surface, in which the other surfaces of the V-shaped incident surfaces are formed in convex and concave shapes, respectively, relative to the above flat shape.

In Fig. 8, the other surface of the V-shaped incident surface 42 is formed in the convex shape. Rays of light, which are emitted from the light source 10 and incident on the other surface 42b of the V-shaped incident surface 42, are focused in a direction indicated by an open arrow Y having a sufficient open angle with the light axis X because a portion surrounded by E-E'-F'-F in a cross section of the optical lens 40 has a convex lens shape.

Also, in Fig. 9, the other surface 52b of the V-shaped incident surface 52 is formed in the concave shape, and in combination with a convex emitting surface 24, forms a lens. Accordingly, even if the other surface 52b is a concave surface, if a curvature radius of the other surface 52b is larger than a curvature radius of the convex emitting surface 24, the combination forms a convex lens.

If, in an illumination fixture applied with an optical lens, a target peak luminous intensity value in the bat wing light distribution is large, the use of an optical lens 50 illustrated in Fig. 9 enables the luminous intensity value to be further increased. On the other hand, if the target peak luminous intensity value in the bat wing light distribution is small, it is only necessary to use the optical lens 40 illustrated in Fig. 8.

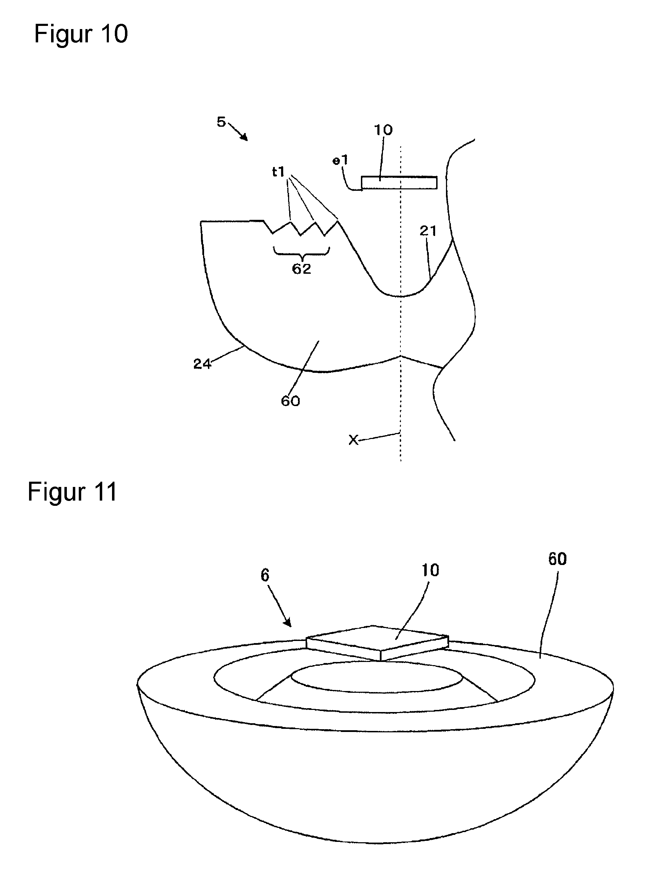

Fig. 10 illustrates an example where a plurality of V-shaped incident surfaces are formed, although the number of V-shaped incident surfaces described above is one. In this case, a depth of a groove of each of the V-shaped incident surfaces can be decreased, and therefore the situation as illustrated in Fig. 7 in which the ray is incident and refracted on and at the vicinity of the end part t1 of the concave incident surface 21, and emitted from the one surface 22a of the V-shaped incident surface 22 can be avoided.

In Fig. 10, shapes of the respective V-shaped incident surfaces 62 are, as illustrated in Fig. 4, determined such that light emitted from the light source 10 is not incident on one surfaces, and therefore, to be exact, different one by one. However, an amount of light incident on each of the surfaces is small, and therefore a shape of the V-shaped incident surface closest to the light source 10 may be duplicated.

Figs. 11 to 13 are perspective views illustrating schematic configuration examples of the illumination fixture according to the embodiment of the present invention.

An illumination fixture 6 illustrated in Fig. 11 is an example including a light source 10, and an optical lens 60 that has a rotation center set to an optical axis X of the light source 10 and a rotating body shape of which a cross-sectional shape is any of those of the above-described optical lenses 20 to 60, according to which the bat wing light distribution can be provided all around.

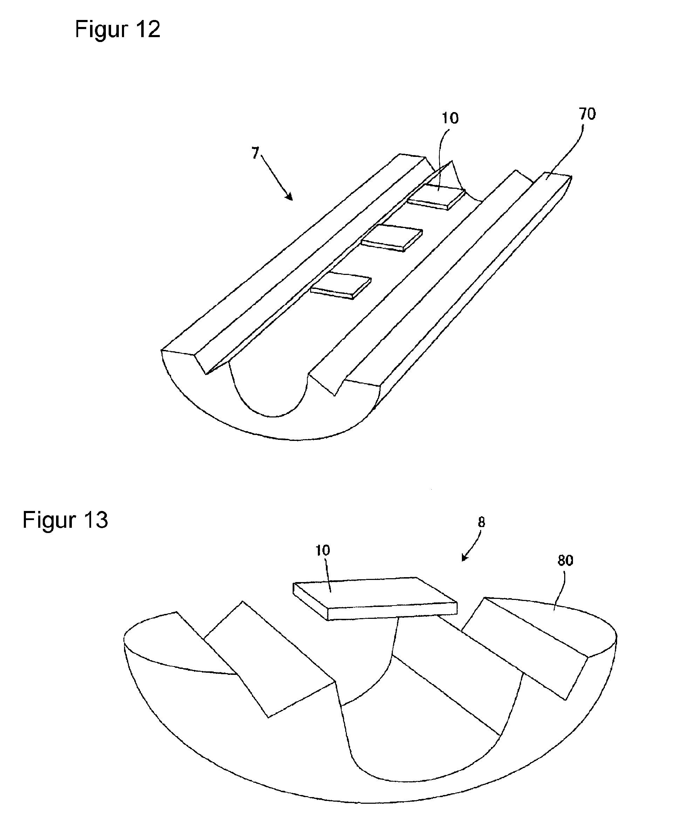

An illumination fixture 7 illustrated in Fig. 12 is an example including a light source 10, and a cylindrically shaped optical lens 70 of which a cross-sectional shape is any of those of the above-described optical lenses 20 to 60 and directly extended. In this case, a belt-like bat wing light distribution can be provided in a direction orthogonal to a direction of the cylindrical extension of the optical lens 70.

An illumination fixture 8 illustrated in Fig. 13 is an example including a light source 10, and an optical lens 80 of which a cross-sectional shape is any of those of the above-described optical lenses 20 to 60, and a convex emitting surface is spheroid-shaped, and enables the bat wing light distribution to be provided in a long axis of the spheroidal optical lens 80.

As described above, according to such a small-sized optical lens of the present embodiment, a high-power LED is used as a light source to enable the bat wing light distribution, and deterioration due to heat generation by the light source can be suppressed. Also, by using the optical lens, an illumination fixture enabling the bat wing light distribution can be provided.

### [Description of Reference Numerals]

1-8: Illumination fixture
10: Light source
20-80: Optical lens
21: Concave incident surface
22-52: V-shaped incident surface
24: Convex emitting surface
e1, e2: End part of light source
t1: End part of concave incident surface
22a-52a: Surface of V-shaped incident surface, which shares end part with concave incident surface
22b-52ba: Surface of V-shaped incident surface, which dose not share end part with concave incident surface

## Claims

1. An optical lens having an incident surface incident with light emitted from a light source, and an emitting surface emitting the light incident on the incident surface, and diffusing and irradiating the light from the light source on an illumination area, wherein
the incident surface includes:
a concave incident surface that faces to the light source and is formed in a concave shape symmetrical with respect to an optical axis of the light source; and
two V-shaped incident surfaces that share end parts with the concave incident surface and is formed symmetrically with respect to the optical axis of the light source, and
the emitting surface includes
two convex emitting surfaces formed symmetrically with respect to the optical axis of the light source.

2. The optical lens according to claim 1, wherein
a surface of the V-shaped incident surface is formed inside an extended surface of a virtual surface connecting between an end part of the light source and the end part shared with the concave incident surface, the surface sharing the end part with the concave incident surface.

3. The optical lens according to claim 1, wherein
a surface of the V-shaped incident surface is formed to have an angle formed by bisecting an angle formed between
an extended surface of a virtual surface connecting between one end part of the light source and the end part shared with the concave incident surface and
a direction of light that is incident on a vicinity of the end part of the concave incident surface from the other end part of the light source and emitted from the surface sharing the end part with the V-shaped incident surface, the surface sharing the end part with the concave incident surface.

4. The optical lens according to any of claims 1 to 3, wherein
the other surface of the V-shaped incident surface is formed in a convex shape, the other surface facing to the surface sharing the end part with the concave incident surface.

5. The optical lens according to any of claims 1 to 3, wherein
the other surface of the V-shaped incident surface is formed in a concave shape, the other surface facing to the surface sharing the end part with the concave incident surface.

6. The optical lens according to any of claims 1 to 5, wherein
a plurality of the V-shaped incident surfaces are formed respectively symmetrically with respect to the optical axis of the light source.

7. An illumination fixture comprising:
the optical lens according to any of claims 1 to 6; and
the light source arranged such that the optical axis is adjusted to a position that symmetrically divides the concave incident surface.
